(19) Europäisches Patentamt
European Patent Office
Office européen des brevets

(11) Veröffentlichungsnummer: **0 513 617 A1**

# (12) EUROPÄISCHE PATENTANMELDUNG

(21) Anmeldenummer: **92107526.3**

(51) Int. Cl.[5]: **C09B 62/245**, D06P 1/382

(22) Anmeldetag: **04.05.92**

(30) Priorität: **14.05.91 DE 4115622**

(43) Veröffentlichungstag der Anmeldung:
**19.11.92 Patentblatt 92/47**

(84) Benannte Vertragsstaaten:
**CH DE FR GB LI**

(71) Anmelder: **BAYER AG**

**W-5090 Leverkusen 1 Bayerwerk(DE)**

(72) Erfinder: **Hoppe, Manfred, Dr.**
**Kölner Strasse 233**
**W-5067 Kürten 2(DE)**
Erfinder: **Herd, Karl-Josef, Dr.**
**Am Gartenfeld 66**
**W-5068 Odenthal-Holz(DE)**
Erfinder: **Henk, Hermann, Dr.**
**Roggendorfstrasse 55**
**W-5000 Köln 80(DE)**

(54) **Reaktivfarbstoffe.**

(57) Reaktivfarbstoffe der Formel

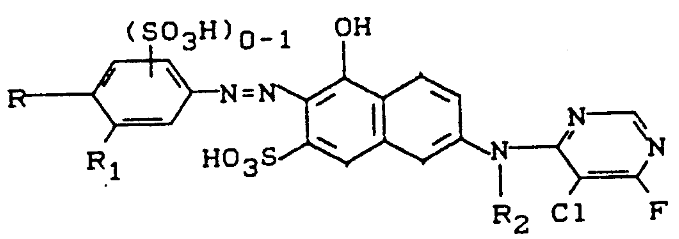

(I)

und deren Salze, worin

R = substituiertes oder unsubstituiertes $C_1$-$C_5$-Alkyl, Cyclohexyl oder Aryl,
$R_1$ = H oder für Reaktivfarbstoffe üblicher Substituent,
$R_2$ = H, $CH_3$, $C_2H_5$.

EP 0 513 617 A1

Gegenstand der vorliegenden Erfindung sind Reaktivfarbstoffe der Formel

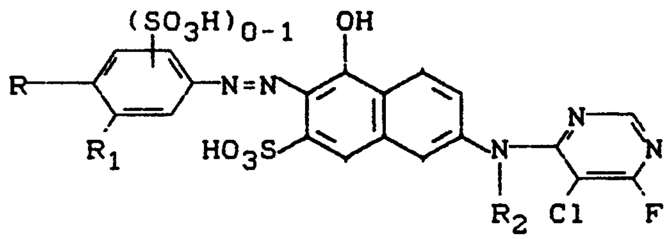

(I)

und deren Salze, insbesondere deren Alkali- oder Ammoniumsalze. Bevorzugt sind dabei Li-Salze, insbesondere bei Farbstoffen mit 2 Sulfogruppen.

R = gegebenenfalls substituiertes $C_1$-$C_5$-Alkyl, Cyclohexyl oder Aryl, insbesondere gegebenenfalls substituiertes Phenyl,

$R_1$ = H oder Substituent, insbesondere Sulfo, Halogen, insbesondere Cl oder Br, $C_1$-$C_4$-Alkyl,

$R_2$ = H, $CH_3$, $C_2H_5$.

Die Formel (I) gibt die sulfogruppenhaltigen Farbstoffe in Form der freien Säuren an.

Die Herstellung der Farbstoffe I erfolgt beispielsweise nach folgenden Verfahren:

1. Durch Kondensation einer Reaktivkomponente der allgemeinen Formel

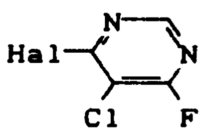

(II)

in der
Hal für Chlor oder Fluor steht,
mit einem Aminoazofarbstoff der allgemeinen Formel

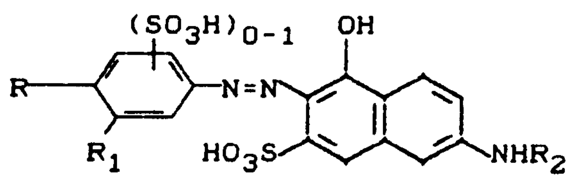

(III)

in der
R, $R_1$ und $R_2$ die angegebene Bedeutung haben;

2. durch Azokupplung eines Kondensationsproduktes der Formel

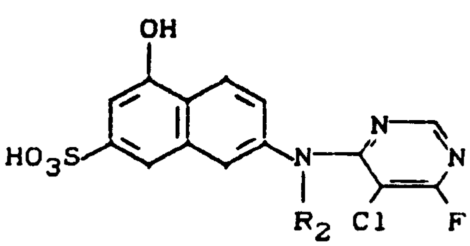

(IV)

mit Diazoniumverbindungen, die auf üblichem Wege aus den Aminen der allgemeinen Formel (V) erhalten werden

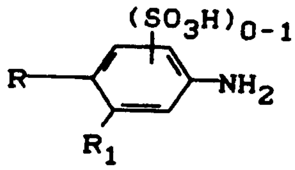

(V)

wobei

R, $R_1$ und $R_2$ die angegebene Bedeutung haben.

Reaktivkomponenten der allgemeinen Formel (II), z.B. 4,6-Difluor-5-chlorpyrimidin oder 4,5-Dichlor-6-fluorpyrimidin sind bekannt und beispielsweise aus 4,5,6-Trichlorpyrimidin durch Fluoridaustausch mit HF oder Alkalifluoriden in aprotischen Lösungsmitteln zu erhalten.

Die Kondensation mit Aminoazofarbstoffen der Formel (III) wird bevorzugt in wäßriger Lösung oder Suspension im pH-Bereich von 4-7 ausgeführt. Der freiwerdende Halogenwasserstoff wird durch Zugabe von wäßrigen Alkali, insbesondere Lihydroxiden, -carbonaten oder - bicarbonaten abgestumpft.

Die Aminoazofarbstoffe der allgemeinen Formel (III) können auf üblichen Wegen duch Azokupplung von Diazoniumverbindungen aus den Aminen der allgemeinen Formel (V) mit Verbindungen der Formel (VI) erhalten werden, wobei die Bedingungen so gewählt werden, daß die Kupplung in o-Stellung zur OH-Gruppe des I-Säure-Derivates erfolgt.

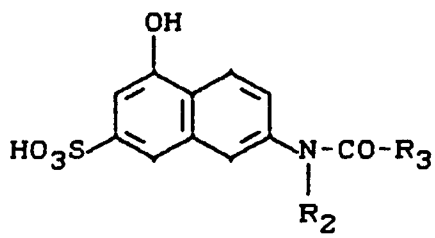

(VI)

$R_3$ steht für einen gegebenenfalls substituierten aliphatischen oder aromatischen Rest.

Der Acylrest $-CO_2R$ wird im Anschluß an die Kupplung durch Erwärmen in saurem oder alkalischem Medium abgespalten.

Als Acylrest kommen insbesondere Formyl, Acetyl, Malonyl, Carbamoyl oder Phthaloyl in Frage.

Als Diazokomponenten der allgemeinen Formel (V) sind folgende Verbindungen bevorzugt: 1-Amino-4-methylbenzol-2-sulfonsäure, 1-Amino-4-methylbenzol-3-sulfonsäure, 1-Amino-4-ethylbenzol-2-sulfonsäure, 1-Amino-4-ethylbenzol-3-sulfonsäure, 4-Aminodiphenyl-2-sulfonsäure, 1-Amino-4-methylbenzol-2,5-disulfonsäure, 1-Amino-4-ethylbenzol-2,5-disulfonsäure.

Die neuen Farbstoffe eignen sich zum Färben und Bedrucken von insbesondere Hydroxyl- und Amidgruppen enthaltenden Materialien, wie Textilfasern, -fäden und -geweben aus Wolle, Seide und besonders zum Färben und Bedrucken von nativer oder regenerierter Cellulose, wobei die Behandlung von Cellulosematerialien zweckmäßigerweise in Gegenwart säurebindender Mittel und gegebenenfalls durch Hitzeeinwirkung nach den für Reaktivfarbstoffe bekanntgewordenen Verfahren erfolgt.

Beispiel 1

23,9 g 2-Amino-5-hydroxynaphthalin-7-sulfonsäure werden in 175 ml Wasser bei 35 °C mit etwa 20 ml 20 %iger Natronlauge gelöst. Anschließend wird durch Zugabe von ca. 7 ml 36 %iger Salzsäure ein pH-Wert von etwa 5,5 eingestellt. In die so erhaltene Suspension werden 15,1 g 4,6-Difluor-5-chlorpyrimidin bei 35 °C langsam eingetropft. Nach vorübergehender Lösung fällt das hellgraue Acylierungsprodukt der Formel

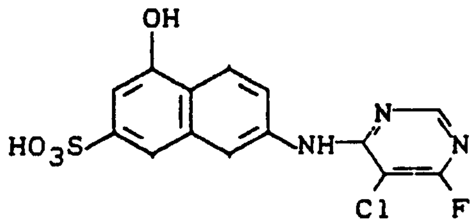

langsam aus. Während der Kondensation wird der pH-Wert mit verdünnter Sodalösung oder durch Zugabe von verdünnter LiOH bzw. Natronlauge bei 5,1 bis 5,3 gehalten.

In die so erhaltene Suspension wird die auf üblichem Wege erhaltene Suspension der Diazoniumverbindung aus 19,1 g 1-Amino-4-methylbenzol-2-sulfonsäure in ca. 200 ml verdünnter Salzsäure unter Eiskühlung eingerührt. Durch Zugabe von Natrium- oder vorzugsweise Lithiumcarbonat wird ein pH-Wert von ca. 6,5 gehalten. Nach mehrstündigem Nachrühren wird der ausgefallene Farbstoff abgesaugt und im Vakuum bei ca. 50 ° C getrocknet. Der Farbstoff liegt dann als rotbraunes Pulver vor und färbt Baumwolle in orangen Tönen Es besitzt folgende Konstitution:

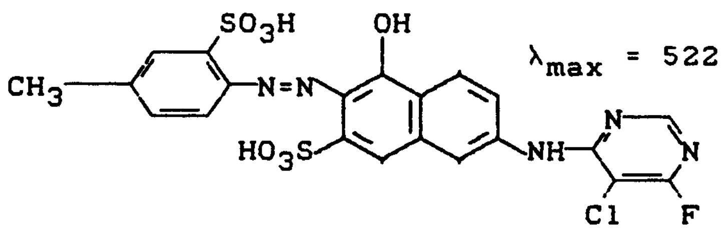

$\lambda_{max}$ = 522 nm ($H_2O$)

Beispiel 2

51,7 g des Aminoazofarbstoffs der Formel

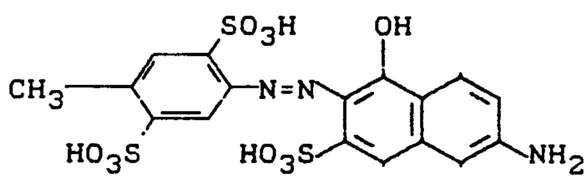

werden in 350 ml Wasser bei 70 ° C mit ca. 20 ml 20 %iger Natronlauge gelöst. In die so erhaltene Lösung gibt man bei 70 ° 16,6 g (0,11 Mol) 4,6-Difluor-5-chlorpyrimidin, wobei der pH-Wert mit Sodalösung zwischen 5,3 und 5,5 gehalten wird und die Temperatur bei 70 ° C gehalten wird. Nach ca. 3-4 Stunden ist die Kondensation beendet. Dann werden 250 ml Wasser zugegeben und bei 50 ° C mit 140 g Kochsalz der Farbstoff ausgeschieden. Der ausgefallene Farbstoff wird dann abgesaugt und im Vakuum bei ca. 50 ° C getrocknet. Das Produkt liegt dann als orangefarbenes Pulver vor, löst sich in Wasser mit oranger Farbe und färbt Baumwolle in orangen Tönen.

Es besitzt folgende Konstitution:

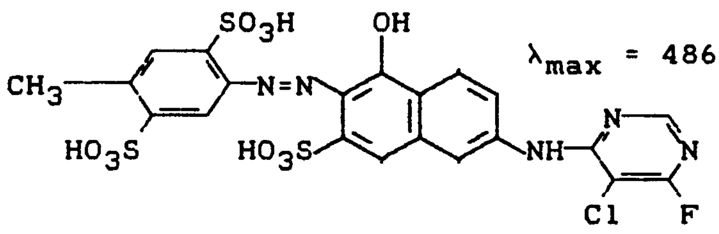

$\lambda_{max}$ = 486 nm ($H_2O$)

## Patentansprüche

1. Reaktivfarbstoffe der Formel

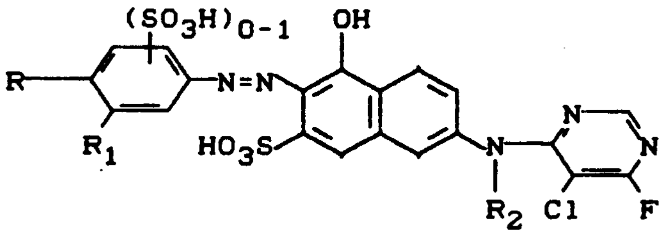

(I)

und deren Salze, worin
R = substituiertes oder unsubstituiertes $C_1$-$C_5$-Alkyl, Cyclohexyl oder Aryl,
$R_1$ = H oder für Reaktivfarbstoffe üblicher Substituent,
$R_2$ = H, $CH_3$, $C_2H_5$.

2. Farbstoffe gemäß Anspruch 1, worin bedeuten
R = $C_2H_5$, $CH_3$.

3. Farbstoffe gemäß wenigstens einem der vorhergehenden Ansprüche, dadurch gekennzeichnet, daß
$R_1$ = H, Sulfo, Halogen, $R_2$ = H.

4. Farbstoffe gemäß wenigstens einem der vorhergehenden Ansprüche, dadurch gekennzeichnmet, daß
R = $CH_3$ und
$R_1$ = $SO_3H$, H
$R_2$ = H.

5. Farbstoffe gemäß wenigstens einem der vorhergehenden Ansprüche, dadurch gekennzeichnet, daß sie wenigstens einer der folgenden Formeln entsprechen

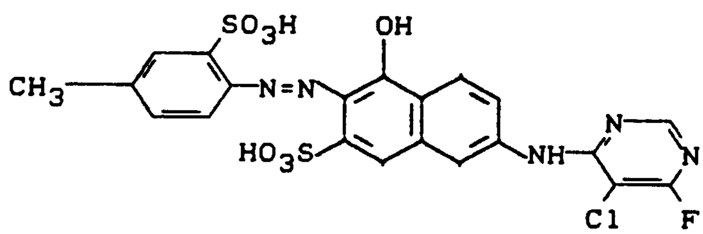

1)

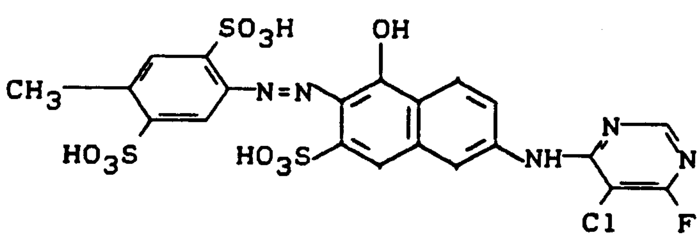

2)

6. Verfahren zum Färben oder Bedrucken von Materialien mit einem Farbstoff, dadurch gekennzeichnet, daß ein Farbstoff gemäß Anspruch 1 verwendet wird.

Europäisches Patentamt

# EUROPÄISCHER RECHERCHENBERICHT

Nummer der Anmeldung

EP 92 10 7526

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 377 189 (BAYER)<br>* Ansprüche 1-2 *<br>--- | 1-6 | C 09 B 62/245<br>D 06 P 1/382 |
| A | EP-A-0 016 931 (BAYER)<br>* Beispiel 110 *<br>--- | 1-6 | |
| A | US-A-4 007 164 (BIEN et al.)<br>* Beispiel 29 *<br>----- | 1-6 | |

RECHERCHIERTE SACHGEBIETE (Int. Cl.5)

C 09 B

Der vorliegende Recherchenbericht wurde für alle Patentansprüche erstellt

| Recherchenort | Abschlußdatum der Recherche | Prüfer |
|---|---|---|
| DEN HAAG | 17-06-1992 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)